# EUROPÄISCHE PATENTSCHRIFT

(11) **EP 0 575 663 B1**
(45) Veröffentlichungstag und Bekanntmachung des Hinweises auf die Patenterteilung: **06.08.1997**
(21) Anmeldenummer: 92119249.8
(22) Anmeldetag: 11.11.1992
(51) Int. Cl.: G01D 5/249

(54) **Sensor zur Erzeugung von elektrischen Signalen, welche die Stellung einer Drosselklappe wiedergeben**
Sensor for producing electrical signals, which give the position of a control valve
Capteur pour produire les signaux électriques, indiquant la position d'une soupape de contrôle

(30) Priorität: 23.05.1992 DE 4217168
(43) Veröffentlichungstag der Anmeldung: 29.12.1993
(73) Patentinhaber: VDO Adolf Schindling AG, D-60487 Frankfurt (DE)
(72) Erfinder: Göhring, Frank, W-6000 Frankfurt (Main) (DE)
(74) Vertreter: Klein, Thomas, Dipl.-Ing. (FH)

(56) Entgegenhaltungen:
- US-A- 4 736 187
- PATENT ABSTRACTS OF JAPAN vol. 15, no. 418 (P-1266)23. Oktober 1991 & JP-A-31 70 019 ( NIKON CORP.) 23 Juli 1991

## Beschreibung

Die Erfindung betrifft einen Sensor zur Erzeugung von elektrischen Signalen, welche die Winkelstellung der Drosselklappe einer Brennkraftmaschine wiedergeben, wobei Inkrementalgeber durch Abtastung von periodisch wiederkehrenden Markierungen Zählimpulse und eine Richtungsinformation erzeugen und Mittel zur Abtastung weiterer Markierungen vorgesehen sind, die bei Bewegung der Drosselklappe serielle Signale erzeugen, welche einen Absolutwert der Stellung beinhalten, wie in DE-A-40 41 491 beschrieben.

Zur Messung der Stellung eines Objekts, beispielsweise der Drehlage einer Welle, sind sogenannte Inkrementalgeber bekanntgeworden, bei denen pro Stellungs-Inkrement ein Impuls erzeugt wird, der einem Zähler zugeführt wird. Zur Unterscheidung der Bewegungsrichtung ist es bei diesen Inkrementalgebern bekannt, zwei phasenverschobene Spuren anzuordnen, die mit je einem Abtastelement abgetastet werden. Eine einfache Auswertung ergibt dann die Zählimpulse und zusätzlich eine Richtungsinformation für den Zähler.

Bei diesen bekannten Inkrementalgebern macht sich jedoch das Fehlen einer Information über die absolute Stellung nachteilig bemerkbar. So liegt beispielsweise nach dem Einschalten einer mit einem derartigen Inkrementalgeber versehenen Einrichtung keine Information über die absolute Stellung vor, wenn das Objekt beim Einschalten eine beliebige Stellung aufweist. Außerdem können durch Zählfehler Fehler bezüglich der absoluten Stellung auftreten. Insbesondere bei sicherheitsrelevanten Anwendungen in Kraftfahrzeugen können jedoch derartige Fehler nicht zugelassen werden.

Diese Nachteile werden bei DE-A-40 41 491 dadurch vermieden, daß Mittel zur Abtastung weiterer Markierungen vorgesehen sind, die bei Bewegung des Objekts serielle Signale erzeugen, welche einen Absolutwert der Stellung beinhalten. Bei einer Weiterbildung des Gegenstands von DE-A-40 41 491 umfaßt eine weitere Spur die den Absolutwert beinhaltenden Markierungen und Stützpunktmarkierungen, welche den Wortanfang bzw. das Wortende der seriellen Signale kennzeichnen.

Zur einfachen Trennung der Stützpunktmarkierungen und der den Absolutwert beinhaltenden Markierungen ist dabei vorgesehen, daß die Stützpunktmarkierungen auf der weiteren Spur an Stellen aufgezeichnet sind, an welchen eine logische Verknüpfung der periodisch wiederkehrenden Markierungen einen ersten Wert ergeben, und daß die den Absolutwert beinhaltenden Markierungen auf der weiteren Spur an Stellen aufgezeichnet sind, an welchen eine logische Verknüpfung der periodisch wiederkehrenden Markierungen einen zweiten Wert ergibt.

Bei einer optischen Abtastung der Markierungen stellt sich das Problem, daß mit zunehmender Auflösung bei gleichbleibendem Durchmesser der Codescheibe die Schlitzbreite verringert werden muß und somit die Lichtintensität abnimmt. Die periodischen Markierungen können jedoch gleichzeitig mit Hilfe mehrerer Fenster zur Erhöhung der Lichtintensität abgetastet werden. Die den jeweiligen Absolutwert darstellende weitere Spur ist jedoch zwangsläufig unregelmäßig, wodurch eine gleichzeitige Abtastung mehrerer Fenster nicht möglich ist.

Bei DE-A-40 41 491 wird die weitere Spur pro Periode (Markierung und Zwischenraum) zweimal abgetastet. Dieses bedingt, daß die physikalische Breite der Markierungen der weiteren Spur maximal der Breite einer der periodisch wiederkehrenden Markierungen entsprechen darf.

Gemäß der US-PS 4 736 187 ist ein Inkrementalgeber bekannt, bei welchem die weiteren Markierungen Start/Stop-Zeichen einer vorgegebenen Biffolge und dazwischenliegende Datenworte bilden, die den Absolutwert der Stellung angeben und die vorgegebene Biffolge nicht enthalten. Zur Auswertung sind zwei Schieberegister vorgesehen. Die Markierungen müssen vollständig in eines der beiden Schieberegister eingelesen werden, bevor der Auswertevorgang beginnt, was ein kompliziertes Auswerteverfahren zur Folge hat.

Aus der JP-A-31 70 019 ist ein Absolutwertgeber bekannt, welcher nur mit einem bidirektionalen Schieberegister arbeitet. Die Auswertung des Datenwortes als solches ist nicht offfenbart.

Aufgabe der vorliegenden Erfindung ist es, einen Sensor anzugeben, bei welchem auch bei hohen Auflösungen eine zur Abtastung erforderliche Lichtintensität gewährleistet ist. Insbesondere soll eine einwandfreie Identifizierung der im Hauptpatent als Stützpunkte bezeichneten Markierungen auch bei einer relativ großen Fensterbreite möglich sein.

Diese Aufgabe wird durch die Merkmale des Patentanspruchs 1 gelöst.

Eine einwandfreie Funktion des erfindungsgemäßen Sensors auch für den Fall einer Richtungsumkehr wird gemäß einer anderen Weiterbildung der Erfindung dadurch erzielt, daß die seriellen Signale beiden Enden des Schieberegisters zuführbar sind und daß in Abhängigkeit von der Richtungsinformation die seriellen Signale im Schieberegister in der einen oder in der anderen Richtung geschoben werden.

Eine andere vorteilhafte Ausführungsform dieser Weiterbildung besteht darin, daß ein Vergleich der vorgegebenen Bitfolge mit dem Inhalt vorgegebener Speicherplätze sowohl an einem als auch am anderen Ende des Schieberegisters erfolgt und daß in Abhängigkeit von der Richtungsinformation die vor oder die nach dem Start/Stop-Zeichen liegenden Bits als Datenwort ausgewertet werden. Dadurch kann unabhängig von der jeweiligen Bewegungsrichtung zu einem frühstmöglichen Zeitpunkt das Start/Stop-Zeichen erkannt und eines der benachbarten Datenworte ausgewertet werden.

Da bei dieser Ausführungsform je nach Bewegungsrichtung das vor einem Start/Stop-Zeichen oder das hinter einem Start/Stop-Zeichen liegende Datenwort ausgewertet wird, ist weiterhin vorgesehen, daß ein aus dem Datenwort gewonnener Wert für die absolute Stellung um eine Korrekturgröße verändert wird, die davon abhängt, ob das vor oder das hinter einem Start/Stop-Zeichen liegende Datenwort ausgewertet wird.

Da die für das Start/Stop-Zeichen vorgesehene Bitfolge in dem Datenwort nicht vorkommen darf, ist bei vielen Anwendungsfällen eine binäre Codierung des Datenwortes nicht möglich. Um diesen Nachteil für eine weitere Verarbeitung auszuschließen, ist gemäß einer anderen Weiterbildung der Erfindung vorgesehen, daß das Datenwort mit Hilfe einer Codetabelle in einen binär codierten Wert für die absolute Stellung umgerechnet wird, daß der binär codierte Wert um die richtungsabhängige Korrekturgröße verändert und mit der durch die Zählimpulse gewonnenen Relativstellung kombiniert wird.

Die aus den Markierungen der weiteren Spur gewonnenen Informationen beinhalten die absolute Stellung mit einer geringeren Auflösung als die durch die Zählimpulse gewonnene Relativstellung. Um zu einer hochaufgelösten Absolutstellung zu gelangen, sind verschiedene Verfahren möglich. So kann beispielsweise die mit Hilfe der weiteren Spur gewonnene absolute Stellung mit Hilfe der Zählimpulse von einem Stützpunkt zum folgenden krementiert bzw. dekrementiert werden. Ist jedoch einmal eine Zuordnung zwischen dem Zähler für die Zählimpulse und der absoluten Stellung bzw. Position erfolgt, so sind danach zwei Informationen für die absolute Stellung vorhanden. Dieses kann gemäß einer anderen Weiterbildung dadurch zu einer höheren Sicherheit ausgenutzt werden, daß eine Plausibilitätsprüfung zwischen denen durch Zählung der Zählimpulse und denen durch Auswertung der Datenworte entstandenen Informationen erfolgt.

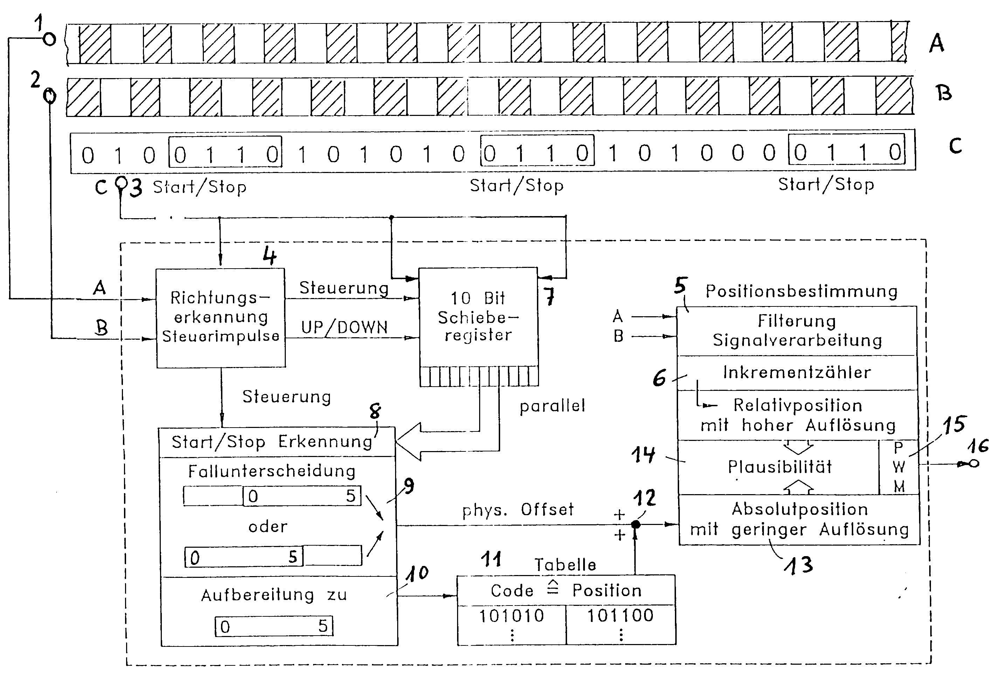

Die Erfindung läßt zahlreiche Ausführungsformen zu. Eine davon ist schematisch in der Zeichnung dargestellt und nachfolgend beschrieben.

In der Zeichnung ist das Ausführungsbeispiel anhand von Schaltungs- bzw. Funktionsgruppen dargestellt. Neben einer Realisierung mit Hilfe derartiger Baugruppen ist jedoch eine Realisierung mit Hilfe eines Mikrocomputers in vorteilhafter Weise möglich, wobei das für den Mikrocomputer erforderliche Programm die Funktionen der einzelnen Baugruppen beinhaltet.

Auf einer nicht dargestellten Codescheibe befinden sich drei Spuren A, B und C, wobei die Spuren A und B periodisch wiederkehrende Markierungen umfassen, die in der Zeichnung gestrichelt dargestellt sind. Diese sind um 1/4 Periode gegeneinander verschoben, wodurch in an sich bekannter Weise eine Richtungserkennung möglich ist. Die Markierungen der weiteren Spur C können in ähnlicher Form wie die Markierungen der Spuren A und B ausgeführt sein; sie sind jedoch im Hinblick auf die durch die Abtastung der Spur C erzeugten Signale in der Figur in Form von binären Werten (1 bzw. 0) dargestellt.

Zur Abtastung sind drei vorzugsweise optische Abtastelemente 1, 2, 3 vorgesehen, welche Signale erzeugen, die in der Zeichnung gleichlautend mit der jeweiligen Spur A, B, C bezeichnet sind. Die Signale A, B werden einerseits einer Schaltung 4 zur Richtungserkennung und zur Erzeugung von Steuerimpulsen und andererseits über eine Filterung und Signalverarbeitung 5 einem Inkrementzähler 6 zugeführt. In letzterem befindet sich jeweils die Relativposition mit hoher Auflösung.

Das Signal C wird der Schaltung 4 und einem Schieberegister 7 zugeleitet. Entsprechend der Anzahl der zu jeweils einer Absolutposition gehörenden Bits, nämlich vier Bits für das Start/Stop-Zeichen und sechs Bits für das Datenwort, ist das Schieberegister 7 für zehn Bit ausgelegt. Es erhält von der Schaltung 4 Impulse zur Steuerung und ein Signal UP/DOWN, das eine Verschiebung des Inhalts des Schieberegisters nach links oder rechts bewirkt. Dieses Signal wird von der mit Hilfe der Signale A und B erzeugten Richtungsinformation abgeleitet. Da ferner das Signal C dem Schieberegister 7 an beiden Enden zugeführt wird, ist die Reihenfolge der einzelnen Bits des Signals C im Schieberegister unabhängig von der Bewegungsrichtung.

Der Inhalt des Schieberegisters wird mit jedem Takt parallel gelesen, worauf in einer Schaltung 8 geprüft wird, ob die ersten vier oder die letzten vier Bits des Inhalts des Schieberegisters mit dem vorgegebenen Start/Stop-Zeichen übereinstimmen. Dazu ist das Start/Stop-Zeichen in der Schaltung 8 gespeichert. Außerdem wird die Schaltung 8 von der Schaltung 4 gesteuert.

Bei 9 werden zwei Fälle unterschieden, nämlich derjenige, bei welchem das Start/Stop-Zeichen dem Datenwort vorangeht oder derjenige, bei welchem das Start/Stop-Zeichen auf das Datenwort folgt. Ein Datenwort kennzeichnet eine bestimmte Absolutposition, beispielsweise die Absolutposition des vorangegangenen Start/Stop-Zeichens. Befindet sich jedoch im Schieberegister ein Datenwort zusammen mit dem folgenden Start/Stop-Zeichen, so ist dieses bei der späteren Bildung des Meßergebnisses zu berücksichtigen. Dazu wird ein Korrekturwert, im folgenden physikalsicher Offset genannt, für den Fall gebildet, daß das Datenwort nicht zu dem jeweils vorgegebenen Start/Stop-Bit gehört. In diesem Fall entspricht der physikalische Offset dem Abstand zweier Start/Stop-Zeichen.

Bei 10 wird das Datenwort von dem Start/Stop-Zeichen getrennt und einer Codetabelle 11 zugeführt, wodurch eine Umwandlung in binär codierte Werte der Position erfolgt. Hierzu wird bei 12 der physikalische Offset hinzuaddiert. Das Ergebnis wird als Absolutposition mit geringer Auflösung bei 13 zwischengespeichert.

Bei 14 erfolgt eine Kombination der Absolutposition mit geringer Auflösung und der Relativposition mit hoher Auflösung. Dabei wird eine Plausibilitätsprüfung zur Erhöhung der Fehlersicherheit durchgeführt. Bei 15 wird das digitale Ergebnis der Kombination bei 14 in ein pulsbreitenmoduliertes Signal umgewandelt, das bei 16 entnommen werden kann. Es ist im Rahmen der Erfindung jedoch auch eine digitale Ausgabe oder eine Ausgabe als analoges Signal möglich.

## Patentansprüche

1. Sensor zur Erzeugung von elektrischen Signalen, welche die Winkelstellung der Drosselklappe einer Brennkraftmaschine wiedergeben, bestehend aus
Inkrementalgebern, welche durch Abtastung von periodisch wiederkehrenden Markierungen Zählimpulse und eine Richtungsinformation erzeugen,
Abtastmitteln zur Abtastung weiterer Markierungen (C), die bei Bewegung der Drosselklappe serielle Signale erzeugen, welche einen Absolutwert der Stellung beinhalten, wobei die weiteren Markierungen (C) Start/Stop-Zeichen einer vorgegebenen Bitfolge und dazwischenliegend Datenworte bilden, die den Absolutwert der Stellung angeben und die vorgegebenen Bitfolgen nicht enthalten,
ein Schieberegister (7), durch das die seriellen Signale bitweise getaktet werden,
eine erste Schaltung (4) zur Erzeugung von einem Takt, wobei mit jedem erzeugten Takt der Inhalt vorgegebener Speicherplätze des Schieberegisters (7) mit der in einem Speicher abgelegten vorgegebenen Bitfolge in einer zweiten Schaltung (8) verglichen wird und bei Übereinstimmung der Inhalt der weiteren Speicherplätze des Schieberegisters (7) als Datenwort ausgewertet wird, und
Mitteln (11), die das Datenwort in einen binär codierten Wert für die absolute Stellung umwandeln, wobei eine Plausibilitätsprüfung der in einem Inkrementalzähler (6) befindlichen Relativposition und der durch Auswertung der Datenworte entstandenen Absolutposition durchgeführt wird und das digitale Ergebnis der Kombination in ein pulsbreitenmoduliertes Signal umgewandelt wird.

2. Sensor nach Anspruch 1, bei dem die seriellen Signale beiden Enden des Schieberegisters (7) zuführbar sind und in Abhängigkeit von der Richtungsinformation die seriellen Signale im Schieberegister (7) in der einen oder in der anderen Richtung geschoben werden.

3. Sensor nach Anspruch 1, bei dem der Vergleich der vorgegebenen Bitfolge mit dem Inhalt vorgegebener Speicherplätze sowohl an einem als auch am anderen Ende des Schieberegisters (7) erfolgt und in Abhängigkeit von der Richtungsinformation die vor oder die nach dem Start/Stop-Zeichen liegenden Bits als Datenwort ausgewertet werden.

4. Sensor nach Anspruch 3, bei dem der aus dem Datenwort gewonnene Wert für die absolute Stellung um eine Korrekturgröße verändert wird, die davon abhängt, ob uas vor oder das hinter einem Start/Stop-Zeichen liegende Datenwort ausgewertet wird.

## Claims

1. A sensor for generating electrical signals which reproduce the angular position of the throttle valve of an internal combustion engine, consisting of
incremental transmitters which generate counting pulses and directional information by sensing periodically recurring marks,
sensing means for sensing further marks (C), which generate serial signals on the movement of the throttle valve, which signals comprise an absolute value of the position, wherein the further marks (C) form start/stop signals of a predetermined bit sequence, and data words situated therebetween which give the absolute value of the position and which do not contain the predetermined bit sequences,
a shift register (7) by which the serial signals are timed bit by bit,
a first circuit (4) for generating a cycle, wherein with each cycle generated the content of predetermined storage locations of the shift register (7) is compared in a second circuit (8) with the predetermined bit sequence which is stored in a memory, and, if these correspond, the content of the further storage locations of the shift register (7) is evaluated as a data word, and
means (11) which transform the data word into a binary coded value for the absolute position, wherein a plausibility check is effected of the relative position located in an incremental counter (6) and of the absolute position resulting from the evaluation of the data words, and the digital result of the combination is transformed into a pulse-width modulated signal.

2. A sensor according to claim 1, wherein the serial signals can be supplied to both ends of the shift register (7) and depending on the directional information the serial signals are displaced in one direction or the other in the shift register (7).

3. A sensor according to claim 1, wherein the comparison of the predetermined bit sequence with the content of predetermined storage locations is made both at the first end and at the other end of the shift register (7), and depending on the directional information the bit situated before or after the start/stop signal is evaluated as a data word.

4. A sensor according to claim 3, wherein the value of the absolute position which is obtained from the data word is altered by a correction value which depends on whether the data word situated before or after a start/stop signal is evaluated.

## Revendications

1. Capteur pour produire des signaux électriques qui donnent la position angulaire du papillon des gaz d'un moteur à combustion interne, constitué
d'émetteurs d'incréments, qui, par exploration de repères qui reviennent périodiquement, produisent des impulsions de comptage et une information relative au sens du mouvement,
des moyens d'exploration pour explorer d'autres repères (C) qui, lors du mouvement du papillon des gaz, produisent des signaux de série qui contiennent une valeur absolue de la position, les autres repères (C) formant un caractère démarrage-arrêt d'une séquence de bits prescrite et de mots de donnée interposés, qui indiquent la valeur absolue de la position et ne contiennent pas les séquences de bits prescrites,
d'un registre à décalage (7) par lequel les signaux de série sont mis en correspondance, bit à bit, avec un signal d'horloge,
d'un premier circuit (4) de production d'un signal d'horloge, étant précisé qu'à chaque signal d'horloge produit , le contenu de positions de mémoire prescrites du registre à décalage (7) est comparé, dans un second circuit (8), avec la séquence de bits prescrite, mémorisée dans une mémoire et, en cas de coïncidence, le contenu des autres positions de mémoire du registre à décalage (7) est traité comme mot de donnée, et
de moyens (11) qui convertissent le mot de donnée en une valeur codée binaire pour la position absolue, une vérification de plausibilité de la position relative qui se trouve dans un compteur d'incréments (6) et de la position absolue résultant du traitement des mots de données étant effectuée et le résultat numérique de la combinaison étant converti en un signal modulé en largeur d'impulsion.

2. Capteur selon la revendication 1, dans le cas duquel les signaux de série peuvent être amenés aux deux extrémités du registre à décalage (7) et, en fonction de l'information relative au sens du mouvement, se décalent dans le registre à décalage (7) dans l'une ou l'autre direction.

3. Capteur selon la revendication 1, dans le cas duquel la comparaison de la séquence de bits prescrite avec le contenu des positions de mémoire prescrites se fait aussi bien à l'une qu'à l'autre des extrémités du registre à décalage (7) et, en fonction de l'information relative au sens du mouvement, ce sont les bits situés avant le caractère démarrage/arrêt, ou ceux situés après ce caractère, qui sont traités comme mot de données.

4. Capteur selon la revendication 3, dans le cas duquel on modifie la valeur, obtenue à partir du mot de donnée, pour la position absolue d'une valeur correctrice qui dépend de savoir si c'est le mot de donnée situé avant un caractère démarrage/arrêt, ou après ce caractère, qui est traité.
